**Europäisches Patentamt**

(19) **European Patent Office**

**Office européen des brevets**

(11) Veröffentlichungsnummer: **0 009 292**
**B1**

(12) # EUROPÄISCHE PATENTSCHRIFT

(45) Veröffentlichungstag der Patentschrift:
09.12.81

(21) Anmeldenummer: **79200521.7**

(22) Anmeldetag: **18.09.79**

(51) Int. Cl.³: **G 01 B 15/02**

(54) Verfahren und Anordnung zum Ermitteln des Innenmasses von langgestreckten Hohlkörpern, insbesondere von Rohren.

(30) Priorität: **20.09.78  DE 2840819**

(43) Veröffentlichungstag der Anmeldung:
**02.04.80 Patentblatt 80/7**

(45) Bekanntmachung des Hinweises auf die Patenterteilung:
**09.12.81 Patentblatt 81/49**

(84) Benannte Vertragsstaaten:
**BE DE FR GB IT NL SE**

(56) Entgegenhaltungen:
**FR-A1-2 277 327**
**GB-A-1 069 541**
**US-A-3 796 874**

**Patents Abstracts of Japan**
**Band 1, Nr. 92, 25. August 1977**
**Seite 2379 E77**

**Patents Abstracts of Japan**
**Band 1, Nr. 92, 25. August 1977**
**Seite 2488 E77**

(73) Patentinhaber: **Philips Patentverwaltung GmbH,**
**Steindamm 94, D-2000 Hamburg 1 (DE)**
(84) Benannte Vertragsstaaten: **DE**

(73) Patentinhaber: **N.V. Philips' Gloeilampenfabrieken, Pieter**
**Zeemanstraat 6, NL-5621 CT Eindhoven (NL)**
(84) Benannte Vertragsstaaten: **BE FR GB IT NL SE**

(72) Erfinder: **Gehm, Ulrich, Dr., Hermann-Löns-Weg 2,**
**D-2000 Norderstedt 3 (DE)**

(74) Vertreter: **Hartmann, Heinrich et al, Philips**
**Patentverwaltung GmbH Steindamm 94,**
**D-2000 Hamburg 1 (DE)**

## Verfahren und Anordnung zum Ermitteln des Innenmasses von langgestreckten Hohlkörpern, insbesondere von Rohren

Die Erfindung betrifft ein Verfahren und eine Anordnung zum Ermitteln des Innenmasses von langgestreckten Hohlkörpern, insbesondere von Rohren, bei welchen der Hohlkörper mit einer ausserhalb des Hohlkörpers angeordneten Röntgen- oder Gammastrahlenquelle durchstrahlt wird und die Intensität der Strahlung jenseits des Hohlkörpers erfasst und die Lage des Intensitätsminimums bestimmt wird. Ein solches Verfahren ist aus der GB-A- 1 069 541 bekannt.

Bei der Fertigungskontrolle von Hohlkörpern sind oft die Abmessungen im Innern des Hohlkörpers von Bedeutung. Diese Abmessung kann aber meist nicht ohne Zerstörung des Hohlkörpers gemessen werden. So besteht beispielsweise bei der Fertigungskontrolle von tiefgezogenen Rohren das Problem, die Innenabmessungen des Rohres, insbesondere die Wandstärke, ständig zu kontrollieren, wobei erschwerend hinzukommt, dass die Rohre während des Fertigungsvorganges rotglühend sind, so dass es nicht möglich ist, das Rohr mittels eines in bekannter Weise innerhalb des Rohres eingebrachten Röntgenstrahlers zu kontrollieren.

Bei dem bekannten Verfahren wird ein Rohr von einem Röntgenstrahler durchstrahlt und die Intensität jenseits des Rohres wird von einer Ionisationskammer gemessen und der Messwert wird angezeigt. Vergleicht man das Messergebnis mit demjenigen eines zylindrischen Körpers mit exakt den gleichen äusseren Abmessungen und aus dem gleichen Material, lassen sich daraus Rückschlüsse über den inneren Durchmesser des Rohres ziehen. Voraussetzung ist allerdings, dass der äussere Rohrdurchmesser genau bekannt ist. Bei diesem Verfahren können sich insbesondere bei der Untersuchung von Rohren aus stark absorbierendem Material, z. B. Stahlrohren, Messfehler durch die an dem Rohr vorbei direkt auf die Ionisationskammer treffende Strahlung ergeben, weil deren Intensität um Zehnerpotenzen höher ist als die Intensität der Strahlung, die das Rohr passiert hat, so dass diese Strahlung einen starken Einfluss auf das Messergebnis hat. Schon kleinste Veränderungen der geometrischen Verhältnisse, die dazu führen, dass die direkt von Röntgenstrahlung getroffene Fläche der Ionisationskammer sich ändert, beeinflussen das Messergebnis wesentlich und führen somit zu Fehlmessungen.

Aus der US-A- 3 796 874 ist weiterhin ein Verfahren zur Untersuchung eines Kabels bekannt, bei dem das Kabel mit einer Röntgenstrahlenquelle durchstrahlt wird und bei dem der räumliche Verlauf der Intensität der Röntgenstrahlung jenseits des Kabels zur Bestimmung der Dicke der Isolation ermittelt wird.

Aufgabe der vorliegenden Erfindung ist es, ein Verfahren der eingangs genannten Art so auszugestalten, dass damit die Innenabmessungen eines Hohlkörpers, insbesondere eines Rohres, genau bestimmt werden können unabhängig davon, aus welchem Material der Hohlkörper besteht und unabhängig davon, ob seine äusseren Abmessungen exakt einem vorbekannten Wert entsprechen.

Eine Lösung dieser Aufgabe besteht darin, dass die erste Ableitung der Intensität der Strahlung jenseits des Hohlkörpers entlang einer in einer zu dessen Längsachse ungefähr senkrechten, vorzugsweise den Strahler enthaltenden Ebene befindlichen Linie ermittelt wird, und dass die Lage bzw. der Abstand der Nullstellen der ersten Ableitung bestimmt wird.

Eine andere Lösung dieser Aufgabe besteht darin, dass die erste Ableitung der Intensität der Strahlung jenseits des Hohlkörpers entlang einer in einer zu dessen Längsachse ungefähr senkrechten, vorzugsweise den Strahler enthaltenden Ebene befindlichen Linie ermittelt wird, dass der Verlauf der Intensität beiderseits des Minimums durch je eine Exponentialfunktion angenähert wird, und dass als Ort des Minimums der Punkt bestimmt wird, an dem die so ermittelten Exponentialfunktionen denselben Wert haben.

Die Erfindung wird nachstehend anhand eines in der Zeichnung dargestellten Ausführungsbeispiels näher erläutert. Es zeigen

Fig. 1 in schematischer Darstellung den Strahlengang bei einer erfindungsgemässen Anordnung, den Verlauf der Intensität und den Verlauf des Differentialquotienten der Intensität,

Fig. 2 eine erste Ausführungsform zur Durchführung des Verfahrens und

Fig. 3 eine andere Ausführungsform.

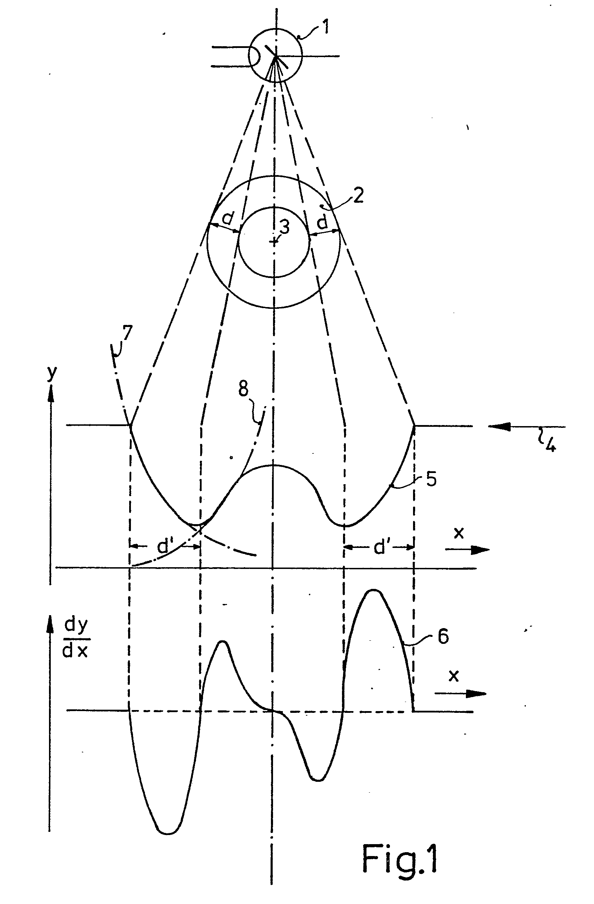

In Fig. 1 ist mit 1 ein Röntgenstrahler und mit 2 ein Rohr bezeichnet, dessen Längsachse 3 senkrecht zur Zeichenebene steht. Die gestrichelt angedeuteten Röntgenstrahlen durchdringen das Rohr, wobei dessen Begrenzungen tangential durchstrahlt werden. Das entstehende Strahlenrelief wird von einem nicht näher dargestellten Wandler in der mit dem Pfeil 4 bezeichneten horizontalen Geraden in ein elektrisches Signal umgewandelt.

Der Verlauf der Intensität y der Strahlung als Funktion des Ortes x auf den erwähnten horizontalen Geraden ist durch die Kurve 5 gegeben. Der Teil der Strahlung, der an dem Rohr 2 vorbei den Wandler erreicht, hat die maximale Intensität. Sobald die Strahlung die Aussenwand des Rohres tangiert bzw. die Rohrwand durchsetzt, nimmt die Strahlungsintensität ab. Sie erreicht ihr Minimum, wenn die Strahlung die Innenwand des Rohres gerade tangiert. Danach steigt die Intensität y bis zur Mittelachse 3 des Rohres hin an. Jenseits der Mittelachse verläuft die Intensität symmetrisch zum bisher beschriebenen Verlauf.

Der Teil der Schwächungskurve, der sich zwischen dem Minimum und dem Punkt erstreckt, an dem die Intensität von ihrem Maximalwert abzunehmen beginnt, ist mit d' bezeichnet. Sie geht linear aus den geometrischen Dimensionen der Schattenprojektionen der Rohrwandstärke von d hervor, wenn der Abstand des Rohres vom Strahler gross ist im Vergleich zur Wandstärke des Rohres.

Aus physikalischen Gründen stellt das Kurvenminimum keinen scharfen Übergang dar, sondern erstreckt sich über einen gewissen Bereich. Um dennoch den genauen Ort des Minimums zu bestimmen, gibt es zwei Möglichkeiten:

Bei der einen Möglichkeit wird der Differentialquotient der Intensität y nach dem Ort x gebildet. Die sich daraus ergebende Kurve ist in Fig. 1 mit 6 bezeichnet. An der Stelle der Minima und der Maxima ergibt sich dabei ein Nulldurchgang der Kurve 6. Die Strecke d' ergibt sich also aus dem Abstand zweier Nulldurchgänge sehr genau. Unter Berücksichtigung des Vergrösserungsmassstabes lässt sich daraus die Wandstärke d des Rohres 2 ableiten.

Die zweite Möglichkeit beruht auf der Erkenntnis, dass die Äste der Intensitätskurve 5 beiderseits des Minimums d einer Exponentialfunktion vom Typ $y = a \cdot e^{bx}$ folgen, wobei sich lediglich im Bereich des Minimums Abweichungen ergeben. Es ist daher grundsätzlich möglich, diesen Teil der Kurve 5 durch zwei Exponentialfunktionen zu ersetzen, wie in Fig. 1 durch die strichpunktierten Kurven 7 und 8 angedeutet. Die Koeffizienten der Exponentialfunktionen können dabei nach den Formeln

$$b = \frac{\sum x_i \ln y_i - \frac{1}{n} (\sum x_i) \sum \ln y_i)}{\sum x_i^2 - \frac{1}{n} (\sum x_i)^2} \qquad (1)$$

$$a = \exp \left[ \frac{\sum \ln y_i}{n} - b \frac{\sum x_i}{n} \right] \qquad (2)$$

ermittelt werden. $y_i$ ist dabei die Intensität der Strahlung am Ort $x_i$ mit $i = 1, 2 \ldots n$, wobei n die Anzahl der Stellen ist, an denen die gemessene Intensität zur Ermittlung der Exponentialkurve herangezogen wird. Der Schnittpunkt der beiden so ermittelten Exponentialkurven stimmt praktisch mit dem Ort des Minimums überein. Er lässt sich mit der Gleichung

$$x' = \frac{\ln a1/a2}{b2-b1} \qquad (3)$$

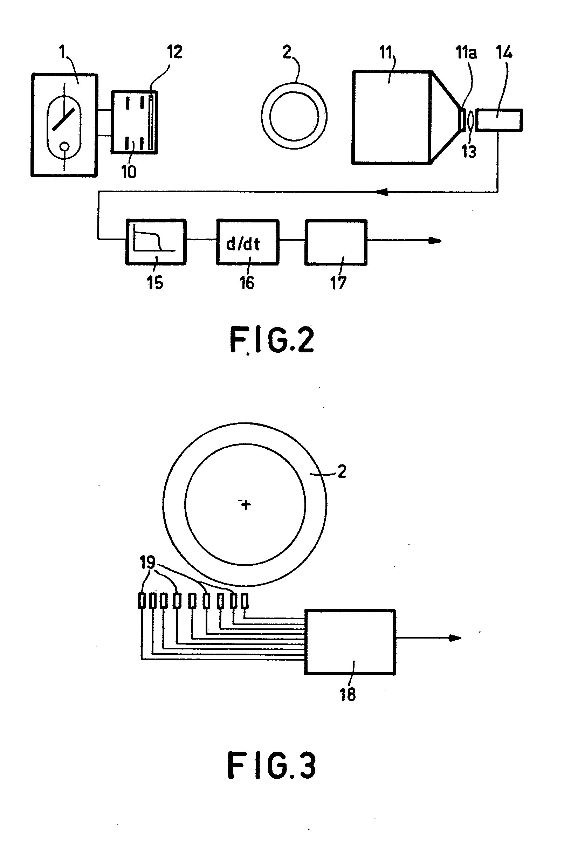

errechnen; b1, a1 sind dabei die den Gleichungen (1) und (2) errechneten Koeffizienten der einen Exponentialkurve (z. B. der Exponentialkurve 7 in Fig. 1) und a2 und b2 sind die Koeffizienten der anderen Exponentialkurve (8). Die in Fig. 2 schematisch dargestellte Anordnung zur Durchführung des Verfahrens benutzt die erstgenannte Möglichkeit zur genauen Ermittlung des Minimums. Die Anordnung enthält einen Röntgenstrahler 1, dessen Strahlung durch eine vorgesetzte Blende 10 so ausgeblendet wird, dass die Rohrwände noch tangential von der Strahlung erfasst werden können, jedoch nur ein geringer Teil der Strahlung an dem Rohr vorbei auf den Eingangsleuchtschirm eines Röntgenbildverstärkers 11 fallen kann. Zwischen den Röntgenstrahler 1 und dem Rohr 2 befindet sich ein Filter 12, das aus einem solchen Material besteht und eine solche Stärke hat, dass das Rohr durch die Röntgenstrahlung einerseits ausreichend durchdrungen werden kann, andererseits der Streustrahlenanteil gering ist.

Der Röntgenbildverstärker 11 wandelt das auf seinem Eingangsschirm erzeugte Strahlenrelief des Rohres 2 in ein sichtbares Bild um, das verstärkt an seinem Ausgangsschirm 11a erscheint. Das in seiner Helligkeit verstärkte Ausgangsschirmbild wird über eine geeignete Optik 13 von einer Fernsehkamera 14 aufgenommen. Die Fernsehkamera ist so angeordnet, dass die Zeilenrichtung senkrecht zur Mittelachse des Rohres 2 verläuft (die Zeilenrichtung verläuft in Fig. 2 also in vertikaler Richtung), während die Vertikalrichtung des abgetasteten Bildes parallel zur Mittelachse des Rohres 2 (senkrecht zur Zeichenebene) verläuft. Das von der Fernsehkamera 14 erzeugte Videosignal wird einem Tiefpass 15 zugeführt, der das Videosignal von höherfrequenten Rauschkomponenten befreit, so dass ein geglättetes Signal entsprechend Kurve 5 von Fig. 1 entsteht. Der Ausgang des Tiefpasses 15 ist mit einem Differenzierglied 16 verbunden, an dessen Ausgang daher ein Signal entsteht, dessen zeitlicher Verlauf dem räumlichen Verlauf (in Richtung x) der Kurve 6 entspricht. Der zeitliche Abstand zweier Nulldurchgänge in dem Ausgangssignal ist daher dem räumlichen Abstand zweier Nulldurchgänge in Kurve 6 proportional. Der zeitliche Abstand der Nulldurchgänge wird durch die Schaltung 17 ermittelt. Es kann zu diesem Zweck ein Zeitmarkengenerator vorgesehen sein oder aber eine Schaltung mit einem Tor, das bei dem ersten Nulldurchgang geöffnet wird und dann Impulse geeigneter genau bekannter Frequenz zu einem Zähler durchlässt und bei dem nächsten Nulldurchgang geschlossen wird. Der Zählerstand stellt dann den zeitlichen Abstand der Nullstellen des differenzierten Videosignals bzw. die Wandstärke dar. Das Ausgangssignal der Schaltung 17 könnte mit einem den Sollwert der Nulldurchgänge bzw. der Wandstärke darstellenden elektrischen Signal verglichen und bei einer Abweichung zur Auslösung eines Alarmsignals dienen. Bei einem Einsatz der dargestellen Anordnung während des Herstellungsprozesses können damit aber auch die die Wandstärke des Rohres 2 beeinflussenden Parameter direkt gesteuert werden.

Die Lage der äusseren Rohrwand muss nicht unbedingt durch die Röntgenstrahlung bestimmt werden. Sie könnte auch mit sichtbarem Licht ermittelt werden, wobei die Lichtquelle mit dem Röntgenstrahler und der Lichtsensor mit dem Röntgenstrahlendetektor 11 mechanisch gekoppelt wird.

Wie insbesondere aus Fig. 1 hervorgeht, kann mit dem erfindungsgemässen Verfahren die Wandstärke d nur an jeweils zwei Stellen des Rohres ermittelt werden. Um die Wandstärke auch an anderen Stellen zu ermitteln, muss das Rohr 2 um einen vorgegebenen Winkelbetrag um seine Mittelachse 3 gedreht werden. Anschliessend muss das Rohr senkrecht zur Zeichenebene verschoben werden. Bei einem Herstellungsverfahren, bei dem die Wandstärke längs des Rohrumfanges gleichmässig ist, in Richtung der Rohrachse jedoch ungleichmässig sein kann, kann auf eine Drehung des Rohres verzichtet werden.

Die in Fig. 3 schematisch dargestellte Anordnung gestattet die Ermittlung der Wandstärke indem das Intensitätsminimum als Schnittpunkt zweier Exponentialkurven ermittelt wird. Der Röntgenstrahler 1, die Blenden 10 und das Filter 12 sind der Übersichtlichkeit halber nicht dargestellt. Eine Anzahl jenseits (in bezug auf den nicht dargestellten Strahler) des Rohres 2 in gleichem Abstand voneinander angeordneter Kernstrahlungsdetektoren (die Kernstrahlungsdetektoren sind im Vergleich zu den Abmessungen des Rohres wesentlich kleiner als in der Zeichnung dargestellt) liefert Signale, die der Intensität der Strahlung am Ort der verschiedenen Kernstrahlungsdetektoren entsprechen. Die Signale werden auf nicht näher dargestellte Weise aufbereitet und einem Digitalrechner 18 zugeführt, der daraus gemäss den Gleichungen (1) und (2) die beiden Exponentialfunktionen und anschliessend gemäss Gleichung (3) deren Schnittpunkt berechnet. Die Werte $x_i$ sind dabei durch die räumliche Anordnung der Kernstrahlungsdetektoren vorgegeben, während die Werte $y_i$ durch die Grösse des Signals des Kernstrahlungsdetektors am Ort $X_i$ bestimmt sind. Auch das Ausgangssignal des Rechners 18 kann zur Steuerung des Herstellungsverfahrens oder zur Auslösung eines Alarmsignals benutzt werden.

Es ist nicht unbedingt erforderlich, aber zweckmässig, dass die Kernstrahlungsdetektoren alle denselben Abstand voneinander haben. Ausserdem muss auch nicht – wie aus Fig. 3 ersichtlich – der gesamte Bereich des Rohres von den Kernstrahlungsdetektoren erfasst werden. Es genügt vielmehr, wenn beiderseits des Punktes, an dem der den Innendurchmesser des Rohres 2 tangierende Strahl auftreffen müsste, wenn das Rohr den vorgeschriebenen Innendurchmesser hat, je eine Gruppe von Kernstrahlungsdetektoren angeordnet ist, die beide jeweils die Messwerte zur Ermittlung einer der zugehörigen Exponentialfunktionen ermitteln.

Es ist auch nicht erforderlich, dass die Kernstrahlungsdetektoren auf einem Kreisbogen z. B. um den Brennfleck des Strahlers angeordnet sind. Wichtig ist aber, dass die Detektoren auf einer Linie angeordnet sind, die sich in einer zur Mittelachse des Rohres senkrechten Ebene befindet, die vorzugsweise durch den Röntgenstrahler verläuft.

Der Aussendurchmesser kann gegebenenfalls dadurch ermittelt werden, dass die Position des ersten Kernstrahlungsdetektors (von der Mitte aus gesehen), der voll von Röntgenstrahlung getroffen wird, festgestellt wird. Der Aussendurchmesser kann aber auch wie bereits erwähnt mit Hilfe von sichtbarem Licht ermittelt werden.

Die Ermittlung der Lage der Innenwand des Rohres 2 als Schnittpunkt zweier Exponentialfunktionen kann auch mit Hilfe einer Anordnung erfolgen, die – wie diejenige in Fig. 2 – kontinuierlich ein der Intensität der Strahlung jenseits des Rohres entsprechendes Signal liefern. Dieses Signal muss dann in vorgegebenen zeitlichen Abständen abgetastet und gegebenenfalls quantisiert werden. Die Ermittlung der Strahlenintensität mit Hilfe von Kernstrahlungsdetektoren hat gegenüber einer Anordnung mit Bildverstärker- und Fernsehkamera jedoch den Vorteil der besseren Anpassung an die zu detektierende Energie der Röntgenstrahlen.

Das erfindungsgemässe Verfahren ist nicht nur bei Stahlrohren anwendbar, sondern auch bei Rohren aus beliebigem anderen chemisch homogenem Material, z. B. aus Plastik oder Draht. Es können auch zylinderförmige Hohlkörper verwendet werden, die einen anderen als den in der Zeichnung dargestellten kreisförmigen Querschnitt haben, z. B. einen ellipsenförmigen.

**Patentansprüche:**

1. Verfahren zum Ermitteln des Innenmasses von langgestreckten Hohlkörpern, insbesondere von Rohren, bei welchen der Hohlkörper mit einer ausserhalb des Hohlkörpers angeordneten Röntgen- oder Gammastrahlenquelle durchstrahlt wird und die Intensität der Strahlung jenseits des Hohlkörpers erfasst und die Lage des Intensitätsminimums bestimmt wird, dadurch gekennzeichnet, dass die erste Ableitung (dy/dx) der Intensität (y) der Strahlung jenseits des Hohlkörpers (2) entlang einer in einer zu dessen Längsachse (3) ungefähr senkrechten, vorzugsweise den Strahler enthaltenden Ebene befindlichen Linie ermittelt wird, und dass die Lage bzw. der Abstand (d') der Nullstellen der ersten Ableitung bestimmt wird.

2. Verfahren zum Ermitteln des Innenmasses von langgestreckten Hohlkörpern, insbesondere von Rohren, bei welchen der Hohlkörper mit einer ausserhalb des Hohlkörpers angeordneten Röntgen- oder Gammastrahlenquelle durchstrahlt wird und die Intensität der Strahlung jenseits des Hohlkörpers erfasst und die Lage des Intensitätsminimums bestimmt wird, dadurch gekennzeichnet, dass die erste Ableitung (dy/dx) der Intensität (y) der Strahlung jenseits des Hohlkörpers (2) entlang einer in einer zu dessen Längsachse (3) ungefähr senkrechten, vorzugsweise den Strahler enthaltenden Ebene befindlichen Linie ermittelt wird, dass der Verlauf der Intensität (y) beiderseits des Minimums durch je eine Exponentialfunktion (7, 8) angenähert wird, und dass als Ort des Minimums der Punkt (x') bestimmt wird, an dem die so ermittelten Exponentialfunktionen denselben Wert haben.

3. Anordnung zur Durchführung des Verfahrens nach einem der vorhergehenden Ansprüche, bei dem jenseits des Hohlkörpers ein Bildverstärker (11) angeordnet ist, dass das Ausgangsschirmbild des Bildverstärkers von einer Fernsehkamera (14) in zur Längsachse des Hohlkörpers senkrechten Zeilen abgetastet wird, dadurch gekennzeichnet, dass das Videosignal über ein Differenzierglied (16) einer Schaltung zur Bestimmung der Nulldurchgänge zugeführt wird, die ein dem zeitlichen Abstand eines Nulldurchgangs vom Zeilenbeginn bzw. den zeitlichen Abstand zweier Nulldurchgänge entsprechendes Signal liefert.

4. Anordnung zur Durchführung des Verfahrens nach Anspruch 2, dadurch gekennzeichnet, dass jenseits des Hohlkörpers entlang wenigstens einer zu seiner Längsachse senkrechten Geraden eine Anzahl von Kernstrahlungsdetektoren (19) angeordnet ist und dass die Ausgangssignale der Detektoren (19) einem Digitalrechner (18) zugeführt werden, der den Intensitätsverlauf längs der Geraden durch Exponentialfunktionen annähert und der die Lage des Punktes auf der Linie ermittelt, an dem die Exponentialfunktionen denselben Wert aufweisen.

## Claims:

1. A method of determining the internal dimension of elongate hollow bodies, notably tubes, where the hollow body is irradiated by means of an X-ray source or gamma ray source which is arranged outside the hollow body, on the other side of the hollow body there being determined the intensity of the radiation and the position of the intensity minimum, characterized in that the first derivation (dy/dx) of the intensity (y) of the radiation on the other side of the hollow body (2) is determined along a line which is situated in a plane which is approximately perpendicular to its longitudinal axis (3) and which preferably contains the radiator, and in that the position or the distance (d') of the zero positions of the first derivation is determined.

2. A method of determining the internal dimension of elongate hollow bodies, notably tubes, where the hollow body is irradiated by means of an X-ray source or gamma ray source which is arranged outside the hollow body, on the other side of the hollow body there being determined the intensity of the radiation and the position of the intensity minimum, characterized in that the first derivation (dy/dx) of the intensity (y) of the radiation on the other side of the hollow body (2) is determined along a line which is situated in a plane which is approximately perpendicular to its longitudinal axis (3) and which preferably contains the radiator, the variation in space (5) of the intensity (y) on both sides of the minimum being approximated each time by an exponential function (7, 8), the location of the minimum being determined as the point (x') where the exponential functions thus determined have the same value.

3. A device for performing the method claimed in any preceding Claim, where on the other side of the hollow body there is arranged an image intensifier (11), the exit screen image of the image intensifier being scanned by a television camera (14) in lines perpendicular to the longitudinal axis of the hollow body, characterized in that the video signal is applied, via a differentiator (16), to a circuit for determining the zero crossings which supplies a signal which corresponds to the time distance between a zero crossing and the beginning of the line or the time distance between two zero crossings.

4. A device for performing the method claimed in Claim 2, characterized in that on the other side of the hollow body there are arranged a number of nuclear radiation detectors (19) along at least one straight line which is perpendicular to its longitudinal axis, the output signals of the detectors (19) being applied to a digital computer (18) which approximates the intensity variation along the straight line by exponential functions and which determines the position of the point on the line where the exponential functions have the same value.

## Revendications:

1. Procédé servant à déterminer les dimensions intérieures de corps creux oblongs, notamment de tubes, dans lequel le corps creux est irradié au moyen d'une source de rayonnement Röntgen ou gamma disposée en dehors du corps creux, alors qu'on mesure l'intensité du rayonnement du côté opposé du corps creux et qu'on détermine la position de l'intensité minimum, caractérisé en ce qu'on mesure la première dérivation (dy/dx) de l'intensité (y) du rayonnement du côté opposé du corps creux (2) suivant une ligne se situant dans un plan à peu près perpendiculaire à son axe longitudinal (3) et traversant de préférence la source de rayonnement, et en ce qu'on détermine la position ou la distance (d') des croisements au point nul de la première dérivation.

2. Procédé servant à déterminer les dimensions intérieures de corps creux oblongs, notamment de tubes, dans lequel le corps creux est irradié par une source de rayonnement Röntgen ou gamma disposée en dehors du corps creux, alors qu'on mesure l'intensité du rayonnement du côté opposé du corps creux et qu'on détermine la position de l'intensité minimum, caractérisé en ce qu'on détermine la première dérivation (dy/dx) de l'intensité (y) du rayonnement du côté opposé du corps creux (2) suivant une ligne se situant dans un plan à peu près perpendiculaire à son axe longitudinal (3) et traversant de préférence la source de rayonnement, en ce qu'on approche l'allure spatiale (5) de l'intensité (y) des deux côtés du minimum par une fonction exponentielle (7, 8) et en ce que, comme position du minimum, on définit le point (x') où les fonctions exponentielles ainsi déterminées ont la même valeur.

3. Dispositif de mise en œuvre du procédé selon l'une quelconque des revendications précédentes, dans lequel un amplificateur vidéo (11) est disposé du côté opposé du corps creux, et l'image d'écran de sortie de l'amplificateur vidéo est balayée par une caméra de télévision (14) suivant des lignes perpendiculaires à l'axe longitudinal du corps creux, caractérisé en ce que, à travers un différentiateur (16), le signal vidéo est envoyé sur un circuit servant à déterminer les croisements au point nul, circuit qui fournit un signal correspondant à l'intervalle comprise entre un croisement au point nul et le début de la ligne ou à l'intervalle comprise entre deux croisements au point nul.

4. Dispositif de mise en œuvre du procédé selon la revendication 2, caractérisé en ce que, du côté opposé du corps creux, un certain nombre de détecteurs de radiation nucléaire (19) sont disposés suivant au moins une droite perpendiculaire à son axe longitudinal, et en ce que les signaux de sortie des détecteurs (19) sont envoyés sur une calculatrice numérique (18), qui approche par des fonctions exponentielles l'allure de l'intensité suivant la droite et détermine la position du point sur la ligne, ou les fonctions exponentielles ont la même valeur.

Fig.1

FIG.2

FIG.3